# EUROPEAN PATENT APPLICATION

(11) **EP 4 276 942 A1**
(43) Date of publication of application: **15.11.2023**
(21) Application number: 22172508.8
(22) Date of filing: 10.05.2022
(51) Int. Cl.: H01M 4/36, H01M 4/38, H01M 4/48, H01M 4/505, H01M 4/525, H01M 4/58, H01M 4/587, H01M 4/66, H01M 10/052, H01M 10/0525, H01M 10/0565

(54) **POLYMER ELECTROLYTE, POLYMER ELECTROLYTE MEMBRANE AND CATHODE AS WELL AS PROCESSES FOR MAKING SAME**

(71) Applicant: Karlsruher Institut für Technologie, 76131 Karlsruhe (DE)
(72) Inventor: Bresser, Dominic, 89073 Ulm (DE); Chen, Zhen, 89073 Ulm (DE); Liang, Haipeng, 89077 Ulm (DE); Passerini, Stefano, 89073 Ulm (DE)

(57) **Abstract**

The present invention concerns a polymer electrolyte comprising at least two structural units with weakly coordinating anions as well as methods for preparing said polymer electrolyte.

The polymer electrolyte comprises a copolymer that comprises a polyolefine polymer backbone, at least a first structural unit having the following formula (A) or (B) and at least a second structural unit having the following formula (C): 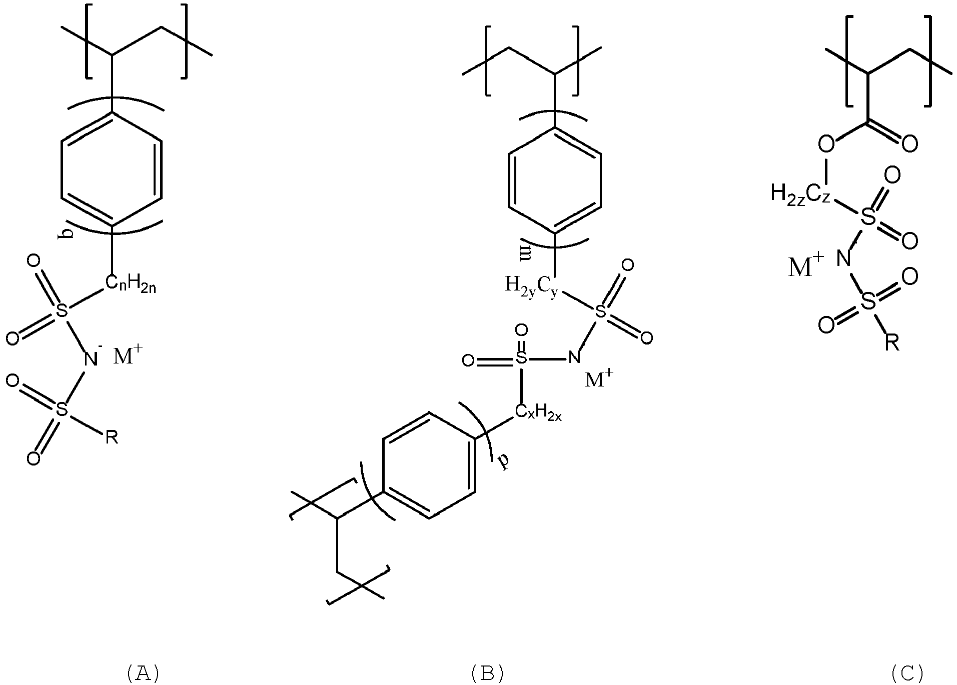 wherein R has the formula -CF₂CF₃, -CF₃ or is a fluorine atom with the formula -F, wherein M⁺ is an alkali metal ion preferably Li⁺, K⁺ or Na⁺ and the alkali metal ion is ionically bound to N⁻; n, x, y being integers ≥ 0; m, p, q being integers ≥ 1 and z being an integer ≥ 2 preferred ≤ 20 more preferred ≤ 10. The present invention also concerns the preparation of electrodes and polymer membranes with said polymer electrolytes and their use in alkali-metal ion batteries.

## Description

The present invention concerns a polymer electrolyte comprising at least two structural units with weakly coordinating anions as well as methods for preparing said polymer electrolyte. The present invention also concerns the preparation of electrodes and polymer membranes with said polymer electrolytes and their use in alkali-metal ion batteries.

Lithium-ion batteries are currently the technology of choice for a wide range of applications, such as portable electronic devices, electrically powered automobiles and stationary energy storage. Against this backdrop, they are gaining steadily increasing economic importance in conjunction with the steadily rising volumes that are being produced and sold.

However, in order to further increase the energy density and safety of lithium-based batteries, one of the most pursued goals is currently the use of lithium metal for the negative electrode in combination with solid electrolytes such as polymers. So-called single ion conductors are most promising for suppressing a possible dendritic lithium deposition, since they allow significantly higher current densities while simultaneously suppressing disadvantageous concentration gradients, as they occur with classical mixtures of polymers and conducting salts. Single-ion conducting polymer electrolytes (SIPEs) are essentially distinct from the salt-in-polymer electrolytes in view of the fact that anions are covalently bound to the polymeric backbones. Various single-ion conducting polymer electrolyte systems are known from the literature and have been described, for instance, by Zhang et al. (Chem. Soc. Rev. 2017 (46) 797-815).

However, these single ion conductors are generally characterized by a relatively low ionic conductivity. In addition, the vast majority of polymers are not stable towards high voltages, i.e., voltages higher than 4 V, which prevents the use of high-energy cathode materials, such as nickel-rich Li[Ni_{1-x-y}MnₓCO_{y}]0₂ (NMC).

The main aim of the present invention is to provide a polymer electrolyte, a polymer membrane, a cathode and an electrochemical cell as well as a method for preparing the same, which overcome the limitations and disadvantages of the prior art.

Furthermore, the aim of the present invention is to provide a polymer electrolyte ensuring high ionic conductivity within the cathode, enabling dendrite-free cycling of high-energy lithium metal anodes and having also a sufficient ionic conductivity at ambient temperature, as well as en improved electrochemical stability towards oxidation.

Another aim of the present invention is top provide a polymer electrolyte with a high conductivity as well as a high stability even at high potentials.

This objective is solved with regard to a polymer electrolyte by the features of claim 1, with regard to a polymer membrane by the features of claim 3, with regard to a cathode by the features of claim 7 and with regard to an electrochemical cell by the features of claim 9. Further the solution is provided by a process of making said polymer electrolyte according to claim 12 and a process for making said polymer membrane according to claim 16.

The subclaims describe advantageous embodiments of the invention.

The present invention will be described in more detail below and, in particular, includes the following aspects:
[1] Polymer electrolyte comprising a copolymer that comprises a polyolefine backbone and at least a first structural unit having the following formula (A) or (B) and at least a second structural unit having the following formula (C): 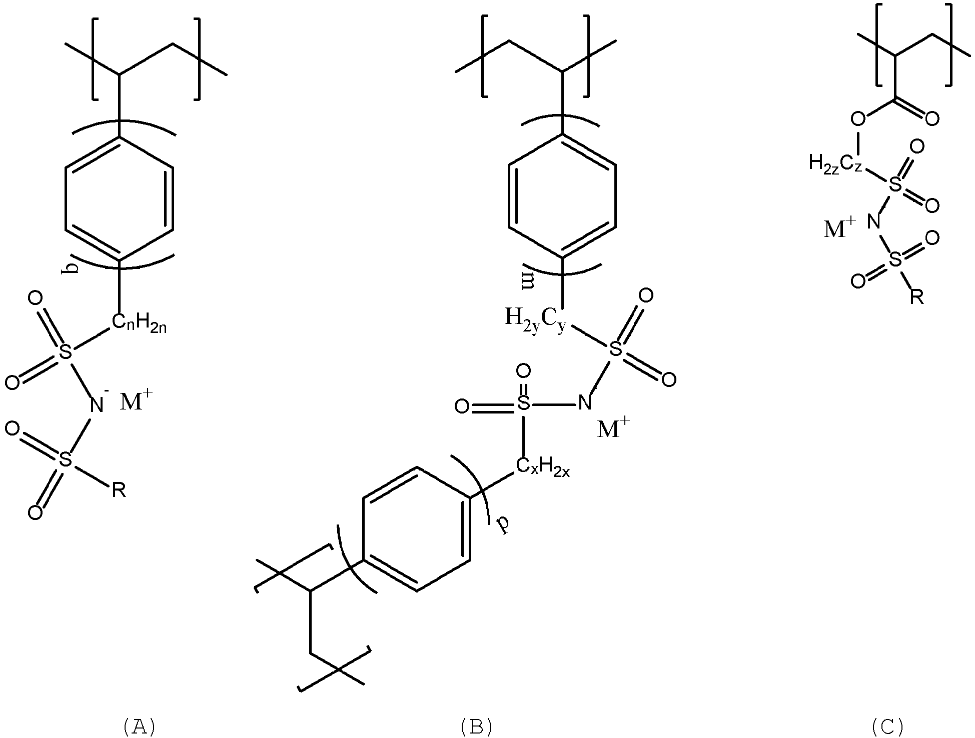 wherein R has the formula -CF₂CF₃, -CF₃ or is a fluorine atom with the formula -F,
   wherein M⁺ is an alkali metal ion preferably Li⁺, K⁺ or Na⁺ and the alkali metal ion is ionically bond to N⁻,
   n, x, y being integers ≥ 0 and
   m, p, q being integers ≥ 1 and
   z being an integer ≥ 2 preferred ≤ 20 more preferred ≤ 10.
[2] Polymer electrolyte according to [1] characterized in that the copolymer comprises at least a third structural unit having the formula (D), where R₁ is a carbonate group and/or a vinyl-based monomer with carbonyl groups. 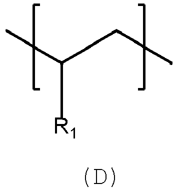
[3] Polymer electrolyte according to [1] or [2] characterized in that R₁ is an ethylene carbonate group.
[4] Polymer electrolyte according to [1] to [3] comprising a crosslinker.
[5] Polymer electrolyte according to [1] to [4] characterized in that the copolymer is a random copolymer with statistical distribution of the first structural unit having the formula (A) or (B) and the second structural unit having the formula (C) and optionnaly the third structural unit having the formula (D).
[6] Polymer electrolyte membrane comprising at least a polymer electrolyte according to [1] to [5].
[7] Polymer electrolyte membrane according to [6] comprising an additive chosen from the group consisting of poly(vinylidene) fluoride (PVdF), poly(vinylidene fluoride-co-hexafluoropropylene) (PVdF-HFP), polyolefins, carboxymethyl cellulose or a gum and it derivatives preferably sodium carboxy methyl cellulose, guar gum, alginate, chitosan, and combinations thereof.
[8] Polymer electrolyte membrane according [7] comprising at least an organic carbonate.
[9] Polymer electrolyte membrane according to [8] characterized in that, the organic carbonate is a linear or a cyclic carbonate or a partially fluorinated carbonate or preferably chosen in the list consisting of ethylene carbonate, dimethyl carbonate, diethyl carbonate, propylene carbonate, ethyl methyl carbonate, fluoroethylene carbonate, and 3,3,3-trifluoropropylene carbonate or ethyl acetate.
[10] Polymer electrolyte membrane according to [6] to [9] characterized in that the polymer membrane is self-standing.
[11] Cathode comprising at least an active cathode material and a polymer electrolyte according to one of the claims [1] to [5].
[12] Cathode according to [11], characterized in that the active cathode material is LiMPO₄, wherein M is chosen from the list consisting of Fe, Mn, Co and Ni or combinations thereof, and/or lithium nickel manganese and/or cobalt oxide (Li-NMC) with the formula LiₐNiₓM_{y}M'_{z}O_{2+b}
   wherein M is chosen from the list consisting of {Co, Mn or combinations thereof},
   M' = Mg, Al, V, Ti, B, Zr, Sr, Ca, Cu, Zn, Nb, Mo, W, Ta and combinations thereof;
   and wherein:
      0,8 ≤ a ≤ 1,2;
      0,2 ≤ x ≤ 1;
      0 < y ≤ 0,8;
      0 ≤ z ≤ 0,2; and
      -0,2 ≤ b ≤ 0,2.
   Preferably: LiNi_{1-x'-y'}Co_{x'}Mn_{y'}O₂ with 0,3 ≤ 1-x'-y' ≤ 1, more preferably, 0,6 ≤ 1-x'-y' ≤ 1.
[13] Cathode according to [11] or [12] characterized in that the cathode material comprises a conductive additive chosen from the group consisting of nanoparticulate and/or nanostructured carbons preferably carbon nanoparticles, nanotubes, nanowires and graphene, graphite, or a metallic conductive additive and a binder chosen from the group consisting of poly(vinylidene) fluoride (PVdF) and related co-polymers, poly(vinylidene fluoride-co-hexafluoropropylene) (PVdF-HFP), polyolefins, carboxymethyl cellulose, gums and their derivatives, sodium carboxy methyl cellulose, guar gum, alginate, chitosan, and combinations thereof.
[14] Electrochemical cell comprising a cathode, an anode and a polymer membrane according to [6] to [10], whereby the polymer membrane is placed between the cathode and the anode.
[15] Electrochemical cell according to [14], characterized in that the active cathode material is LiMPO₄, wherein M is chosen from the list consisting of {Fe, Mn, Co and Ni} or combinations thereof, and/or lithium nickel manganese and/or cobalt oxide (Li-NMC) with the formula LiₐNiₓM_{y}M'_{z}O_{2+b}
   wherein M is chosen from the list consisting of {Co, Mn or combinations thereof},
   M' = Mg, Al, V, Ti, B, Zr, Sr, Ca, Cu, Zn, Nb, Mo, W, Ta and combinations thereof;
   and wherein:
      0,8 ≤ a ≤ 1,2;
      0,2 ≤ x ≤ 1;
      0 < y ≤ 0,8;
      0 ≤ z ≤ 0,2; and
      -0,2 ≤ b ≤ 0,2.
   Preferably: LiNi_{1-x'-y'}Co_{x'}Mn_{y'}O₂ with 0,3 ≤ 1-x'-y' ≤ 1, more preferably, 0,6 ≤ 1-x'-y' ≤ 1.
[16] Electrochemical cell according to [14] characterized in that the cathode is a cathode according to [11] to [13].
[17] Electrochemical cell according to [14] to [16] characterized in that the anode comprises metallic lithium or graphite and/or silicon and/or SiOₓ with x < 2 or a metallic or carbon-based current collector with a coating of metallic lithium.
[18] Process for making a polymer electrolyte wherein said process comprises following steps:
   (a) providing at least a first monomer comprising at least a first anion ionically bound with an alkali metal cation chosen from the list consisting of {Na⁺, Li⁺, K⁺} and at least a second monomer comprising at least a second anion ionically bound with a an alkali metal cation chosen from the list consisting of {Na⁺, Li⁺, K⁺} as reactants
   (b) mixing the reactants
   (c) adding to the reactants an organic solvent
   (d) initiating the polymerization reaction preferably by adding a radical initiator and/or via heat treatment and/or via UV irradiation
   (e) evaporating the organic solvent
   (f) removing the obtained polymer electrolyte.
[19] Process for making a polymer electrolyte according to [18] wherein between step (d) and (e) a step of reprecipitation in an organic solvent and/or a step of centrifugation and/or a step of drying at a temperature in a range between room temperature and 100°C preferably between 50°C and 80°C more preferably between 60°C and 70°C.
[20] Process for making a polymer electrolyte according to [18] or [19] wherein under step (a) a carbonate and/or a vinyl-based monomer with carbonyl groups is provided.
[21] Process for making a polymer electrolyte according to [20] wherein the carbonate is chosen from the group consisting of {vinylene carbonate, 4-vinyl ethylene carbonate, (2-oxo-1,3-dioxolan-4-yl)methyl methacrylate, benzyl vinyl carbonate, 2,2,2-trifluoroethyl vinyl carbonate, tert-butyl 4-vinylphenyl carbonate, 1,1-dimethylethyl ethenyl carbonate, ethenyl ethyl carbonate, and/or the vinyl-based monomer with carbonyl groups is maleic anhydride.
[22] Process for making a polymer electrolyte according to [21] wherein the carbonate is cyclic.
[23] Process for making a polymer electrolyte according to [18] to [22] characterized in that the first monomer is lithium sulfonyl(trifluoromethane sulfonyl)imide styrene (LiSTFSI) or lithium bis(4-vinylphenyl)sulfonyl)imide (LiBVSA) and/or the second monomer is lithium (3-methacryloyloxypropylsulfonyl) (trifluoromethylsulfonyl)imide (LiMTFSI).
[24] Process for making a polymer electrolyte membrane wherein said process comprises following steps:
   (a) providing the polymer electrolyte obtained by a process according to [18] to [23] and an additive
   (b) adding an organic solvent
   (c) evaporating the solvent
   (d) removing the polymer electrolyte membrane.
[25] Process for making a polymer electrolyte membrane according to [24] wherein between step (c) and (d) the polymer electrolyte membrane is put in at least one organic solvent or a mixture of organic solvents preferably carbonates.
[26] Use of the polymer electrolyte according to [1] to [6] in alkali metal ion batteries.
[27] Use of the polymer electrolyte membrane according to [1] to [6] in alkali metal ion batteries.
[28] Use of the cathode according to one of the [11] to [13] in alkali metal ion batteries.

The present invention relates as a first aspect to a polymer electrolyte comprising a copolymer with a polyolefine backbone, at least a first structural unit having the following formula (A) or (B) and at least a second structural unit having the following formula (C): 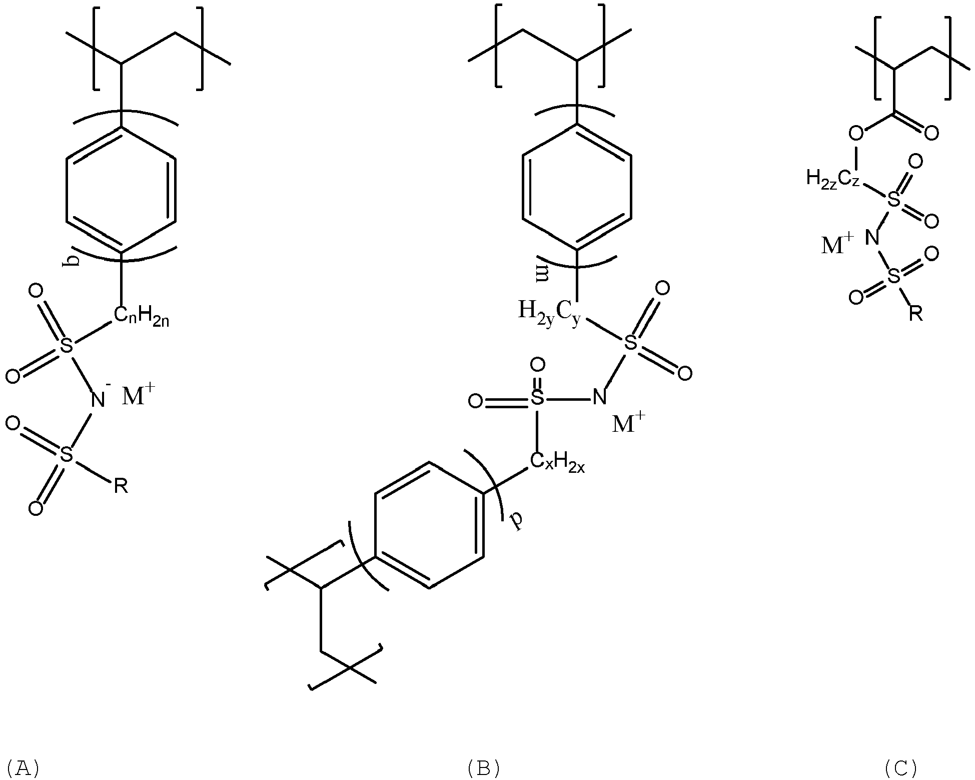 wherein R is a trifluoromethylgroup with the formula -CF₃ or a fluorine atom with the formula -F,
wherein M⁺ is an alkali metal ion preferably Li⁺, K⁺ or Na⁺ and the alkali metal ion is ionically bond to N⁻,
n, x, y being integers ≥ 0 and
m, p, q being integers ≥ 1 and
z being an integer ≥ 2.

In another embodiment z ≤ 20 and preferably z ≤ 10.

In particular the polymer electrolyte is a single-ion polymeric conductor.

The anions are weakly coordinating anions and thus have a rather weak ionic bond with the alkali metal ion in order to facilitate the dissociation and make the alkali metal ion more mobile. This is achieved here by rather large anions for which the negative charge is more delocalized. Large anions for example TFSI-anions and covalently-bonded aromatic ring corporately allow for enhanced charge delocalization. The aromatic ring renders mechanical as well as electrochemical stability and flexible molecular chain enables swift segmental motion.

The polyolefine backbone is a saturated aliphatic polymer chain. It is very simple, light and chemically inert.

In a further embodiment the copolymer comprises at least a third structural unit having the formula (D), where R₁ is a carbonate group.

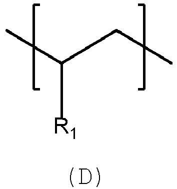

In a particular embodiment, R₁ is a cyclic carbonate group. In a further embodiment R₁ is ethylene carbonate and the formula of the at least third structural unit is (E).

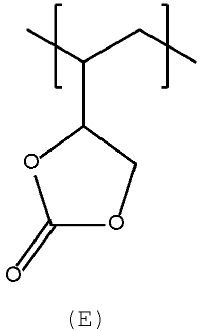

The carbonate functionality enables faster Li⁺ transport via multiple intermolecular interactions. It enhances the plasticization trough solvent-polymer interaction and facilitates Li⁺ transport by introducing hopping sites.

In a further embodiment the polymer electrolyte comprises a crosslinker. The crosslinker can be a lithiated crosslinker like lithium bis(4-vinylphenyl)sulfonyl)imide (LiBVSA) or a crosslinker chosen from the group {divinylbenzene; divinyl sulfone; divinyl imidazole}.

A copolymer is a polymer derived from more than one type of structural unit or monomer. In the present invention there are 4 types of structural units (A), (B), (C) and (D). The copolymer can be randomly structured, alternating or with specific sequences. In a particular embodiment the copolymer is a random copolymer with statistical distribution of the first structural unit having the formula (A) or (B) and the second structural unit having the formula (C) and optionnaly the third structural unit having the formula (D).

The present invention relates as a second aspect to a polymer electrolyte membrane comprising at least a polymer electrolyte according to the above-defined first aspect.

In a particular embodiment the polymer electrolyte membrane comprises an additive chosen from the group consisting of poly(vinylidene) fluoride (PVdF), poly(vinylidene fluoride-co-hexafluoropropylene) (PVdF-HFP), polyolefins, carboxymethyl cellulose or a gum and it derivatives preferably sodium carboxy methyl cellulose, guar gum, alginate, chitosan, and combinations thereof preferably poly(vinylidene fluoride-co-hexafluoropropylene) (PVdF-HFP) to improve the mechanical properties of the membrane. Furthermore they are electrochemically stable. The additive PVdF-HFP especially features low crystallinity and considerable mechanical strength.

In a particular embodiment the carbonate as structural unit (D) improves the miscibility between the polymer electrolyte with the additive preferably with poly(vinylidene fluoride-co-hexafluoropropylene) (PVdF-HFP) via hydrogen-bonding and dipole-dipole interaction.

In a further embodiment the polymer electrolyte membrane comprises at least an organic solvent preferably ether-type solvents comprising an ether group or organic carbonates or mixtures thereof more preferably organic carbonates. The solvent does not evaporate at room temperature or slightly elevated temperatures. The ether-type solvent can be chosen in the list of {dimethyl ether, diglyme and tetraethylene glycol dimethyl ether}. The organic carbonate can be a linear or a cyclic carbonate or a partially fluorinated carbonate or preferably chosen in the list consisting of ethylene carbonate, dimethyl carbonate, diethyl carbonate, propylene carbonate, ethyl methyl carbonate, fluoroethylene carbonate, 3,3,3-trifluoropropylene carbonate and ethyl acetate. The carbonate molecules plasticize the polymer materials within the membrane and provide essential conducting sites for ion conduction. The organic carbonates added as liquid phase additionally coordinates the charge carriers and thus further improve the conductivity.

In a particular embodiment the polymer electrolyte membrane is self-standing. It means that the membrane has suitable mechanical properties for further processing and sufficient flexibility, while also providing a certain rigidity. It does not need any substrate or holder to be used and can be integrated as such in an electrochemical cell for example easily between the anode and the cathode.

The present invention claims also as a third aspect a cathode comprising at least an active cathode material and a polymer electrolyte according to the above-defined first aspect.

In a preferred embodiment the active cathode material is LiMPO₄, wherein M is chosen from the list consisting of Fe, Mn, Co and Ni or combinations thereof, and/or lithium nickel manganese and/or cobalt oxide (Li-NMC) with the formula LiₐNiₓM_{y}M'_{z}O_{2+b}
wherein M is chosen from the list consisting of {Co, Mn or combinations thereof},
M'= Mg, Al, V, Ti, B, Zr, Sr, Ca, Cu, Zn, Nb, Mo, W, Ta and combinations thereof;
and wherein:
   0,8 ≤ a ≤ 1,2;
   0,2 ≤ x ≤ 1;
   0 < y ≤ 0,8;
   0 ≤ z ≤ 0,2; and
   -0,2 ≤ b ≤ 0,2.

In a particular embodiment the lithium nickel manganese and/or cobalt oxide has the formula:
LiNi_{1-x'-y'}CO_{x'}Mn_{y'}O₂ with 0,3 ≤ 1-x'-y' ≤ 1 more preferably 0,6 ≤ 1-x'-y' ≤ 1.

In a further embodiment, the electrochemical energy storage device is a sodium-ion battery (SIB), wherein the cathode active material is selected from sodium analogues of the cathode active materials mentioned above, or other layered sodium transition metal oxides preferably NaₓNi_{y}Fe_{z}Mn_{1-y-z-a}M"ₐO₂, M‴ = Mg, Al, V, Ti, B, Zr, Sr, Ca, Cu, Zn, Nb, Mo, W, Ta and wherein x ≤ 0.8, y ≤ 0.4, z ≤ 0.3, and a ≤ 0.2; or sodium vanadium phosphates preferably Na₃V₂PO₄). Layered sodium transition metal oxides and sodium transition metal phosphates are more preferred.

In a further embodiment, the electrochemical energy storage device is a potassium-ion battery (KIB), wherein the cathode active material is selected from prussian blue analogues preferably KₐNiₓCO_{y}Mn_{z}FeₙO₂
with a < 1
x ≤ 0,5
y ≤ 1
z ≤ 1
and n ≤ 0,5.

In a further embodiment the cathode material comprises a conductive additive chosen from the group consisting of preferably nanoparticulate and/or nanostructured carbons, including preferably carbon nanoparticles, nanotubes, nanowires and graphene, as well as graphite, or a metallic conductive additives and a binder chosen from the group consisting of preferably poly(vinylidene) fluoride (PVdF) and related co-polymers, such as poly(vinylidene fluoride-co-hexafluoropropylene) (PVdF-HFP), as well as polyolefins, carboxymethyl cellulose and, gums and their derivatives, including, for instance, sodium carboxy methyl cellulose, guar gum, alginate, chitosan, and combinations thereof.

The present invention claims also an electrochemical cell being an alkali metal containing cell, with an alkali metal cation chosen from the list consisting of {Na⁺, Li⁺, K⁺} as charge transport carriers preferably lithium-ion containing cells. In lithium-ion containing cells, the charge transport is effected by Li⁺ cations.

In a further embodiment the electrochemical cell comprises a cathode, an anode and a polymer membrane according to the above-defined second aspect, whereby the polymer membrane is placed between the cathode and the anode.

In a particular embodiment the cathode of the electrochemical cell corresponds to the above-defined third aspect of the present invention.

The electrochemical cell may comprise a cathode material, which comprises the polymer electrolyte according to the first aspect of the present invention and/or the polymer membrane according to the second aspect of the invention. It means that the present polymer electrolyte is introduced in the polymer membrane and/or in the cathode material.

In a further embodiment the anode comprises metallic lithium or graphite and/or silicon and/or SiOₓ with x < 2 or a metallic or carbon-based current collector with a coating of metallic lithium. In the latter case, the current collector is therefore plated from the lithium-containing cathode upon charge.

A further aspect of the invention concerns a process for making a polymer electrolyte wherein said process comprises following steps:
(a) providing at least a first monomer comprising at least a first anion ionically bound with an alkali metal cation chosen from the list consisting of {Na⁺, Li⁺, K⁺} and at least a second monomer comprising at least a second anion ionically bound with an alkali metal cation chosen from the list consisting of {Na⁺, Li⁺, K⁺} as reactants
(b) mixing the reactants
(c) adding to the reactants an organic solvent
(d) initiating the polymerization reaction preferably by adding a radical initiator and/or via heat treatment and/or via UV irradiation
(e) evaporating the organic solvent
(f) removing the obtained polymer electrolyte.

In a preferred embodiment the temperature for polymerization via heat treatment is between 35°C and 180°C.

In a further embodiment the UV irritation time may be between 1 to 120 minutes. The light source used has a continuous spectrum and is for example mercury/iron/gallium.

The radical initiator may be azobis(isobutyronitril) (AIBN) or dimetoxy-2-phenylacetophenone.

In a particular embodiment a step of reprecipitation in an organic solvent and/or a step of centrifugation and/or a step of drying at a temperature in a range between room temperature and 100°C preferably between 50°C and 80°C more preferably at 60°C to 70°C between step (d) and (e). Room temperature is here defined as the ambient temperature preferably in the range of 15°C to 25°.

In a further embodiment a carbonate and/or a vinyl-based monomer with carbonyl groups is provided under step (a). The carbonate may be linear or cyclic preferably cyclic. The carbonate may be chosen from the group consisting of {vinylene carbonate, 4-vinyl ethylene carbonate , (2-oxo-1,3-dioxolan-4-yl)methyl methacrylate, benzyl vinyl carbonate, 2,2,2-trifluoroethyl vinyl carbonate, tert-utyl 4-vinylphenyl carbonate, 1,1-dimethylethyl ethenyl carbonate, ethenyl ethyl carbonate. The vinyl-based monomer with carbonyl groups is preferably maleic anhydride. The incorporation of carbonates preferably cyclic carbonates or vinyl-based monomers with carbonyl groups further enhances ionic conductivity.

In a particular embodiment the first monomer is lithium sulfonyl(trifluoromethane sulfonyl)imide styrene (LiSTFSI) or lithium bis(4-vinylphenyl)sulfonyl)imide (LiBVSA) and the second monomer is lithium (3-methacryloyloxypropylsulfonyl) (trifluoromethylsulfonyl)imide (LiMTFSI).

A further aspect of the invention relates to a process for making a polymer electrolyte membrane wherein said process comprises following steps:
(a) providing the polymer electrolyte obtained by the above mentioned process and an additive
(b) adding an organic solvent
(c) evaporating the solvent
(d) removing the polymer electrolyte membrane.

In a particular embodiment the additive is chosen from the group consisting of poly(vinylidene) fluoride (PVdF), poly(vinylidene fluoride-co-hexafluoropropylene) (PVdF-HFP), polyolefins, carboxymethyl cellulose or a gum and it derivatives preferably sodium carboxy methyl cellulose, guar gum, alginate, chitosan, and combinations thereof.

In a further embodiment the polymer electrolyte membrane is put in at least one organic solvent or a mixture of organic solvents preferably carbonates between step (c) and (d).

A further aspect of the invention is the use of the above mentioned polymer electrolyte in alkali metal ion batteries preferably in Li-ion batteries.

A further aspect of the invention is the use of the above mentioned polymer electrolyte membrane in alkali metal ion batteries preferably in Li-ion batteries.

A further aspect of the invention is the use of the above mentioned cathode in alkali metal ion batteries preferably in Li-ion batteries.

The modular structure of the polymer electrolyte of the present invention with a polyolefine backbone to which different structural units are attached, at least two of these groups containing an anionic function coordinated by an alkali cation, allows a great flexibility to the system.

Especially the use of a polyolefine backbone has an advantageous effect on the electrochemical stability towards the anode and cathode, because it is electrochemically very stable and neither oxidized nor reduced in the classical voltage range of a rechargeable battery.

A particular advantage of the present invention is the stable cycling of Li||NMC battery cells also at room temperature enabled by a homogenous deposition of lithium, high electrochemical stability towards oxidation and reduction as well as a high inion conductivity.

The present polymer electrolyte effectively suppresses the formation and growth of dentritic lithium and porous lithium electrodeposits, when incorporated in a cathode and/or in a polymer electrolyte membrane and presents superior electrochemical stability towards lithium metal in symmetric Li||Li cells, outperforming the liquid electrolyte. Superior rate capability and long-term stable cycling are achieved by including the present polymer electrolyte in the composite cathode. The anions as functional components endow the polymer with good mechanical, electrochemical stability and high negative charge delocalization.

The present polymer electrolyte membrane provides suitable ionic conductivities (up to 0.44 mS.cm⁻¹ at 20°C and 0.63 mS.cm⁻¹ at 40°C) and exhibits outstanding oxidation tolerance at high electrochemical potential (up to 5.2 V vs. Li⁺/Li).

The polymer electrolyte with in-built cyclic carbonate functionality shows more than twice ionic conductivity as high as the unmodified electrolyte, and thus displays overwhelming rate performances, while simultaneously retains good enough electrochemical stability towards both lithium metal and high-energy NMC cathodes. The polymer electrolyte with in-built cyclic carbonate functionality suppresses also an undesired porosity, which would trap a lot of solvent for example the additional liquid carbonates to be added, which can thus not contribute to the charge transport anymore. The polymer electrolyte was proven to effectively suppress the growth of dendritic lithium and presented superior (electro)chemical stability towards lithium metal in symmetric Li||Li cells, overwhelming the liquid electrolyte. These features allow for practical operation of high-energy Li||NMC₆₂₂ full-cell of high cell voltage of 4.3 V. Superior rate capability and long-term stable cycling were achieved by including ionomer as catholyte in the composite cathode.

A further advantage of the incorporation of carbonate functionality preferably the cyclic one into single-ion polymeric conductor is, that a miscible blending with the additive like PVdF-HFP and a continuous conduction pathway is allowed. Moreover, the solvent molecules preferably organic carbonates and ether-type solvents are homogeneously distributed in polymer structure thanks to the structural resemblance to cyclic carbonate group, and thus promises exceptional conduction sites. The remarkable improvement in ionic conductivity by using polymer electrolyte membranes with incorporated carbonate functionality by more than two times enables cycling at high C rates in symmetric lithium cells and in LMBs in tandem with cathodes of high nickel content (i.e., NMC₆₂₂ and NMC₈₁₁). Despite oxidative tolerance being slightly compromised by introduction of cyclic carbonate functionality, the electrochemical stability window of SIPE-3VM is still wide enough for stable cycling of high energy Li||NMC full cells.

### Examples

The present invention is illustrated in more detail below by means of working examples and figures, which are not limiting.

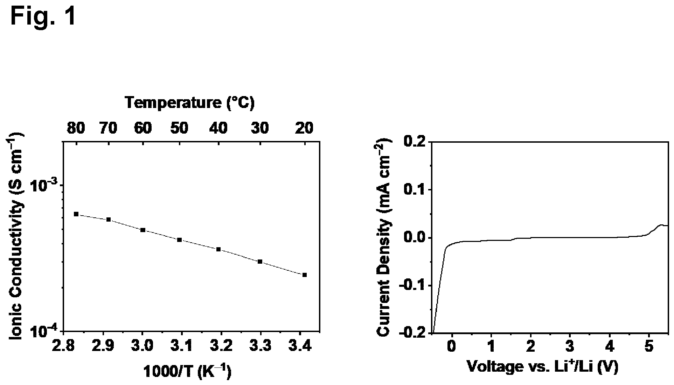

- **Fig. 1a**: Temperature-dependent ionic conductivity plot of a polymer electrolyte membrane according to the invention
- **Fig. 1b**: Electrochemical stability window determined by linear sweep voltammetry at 40°C of a polymer electrolyte membrane according to the invention

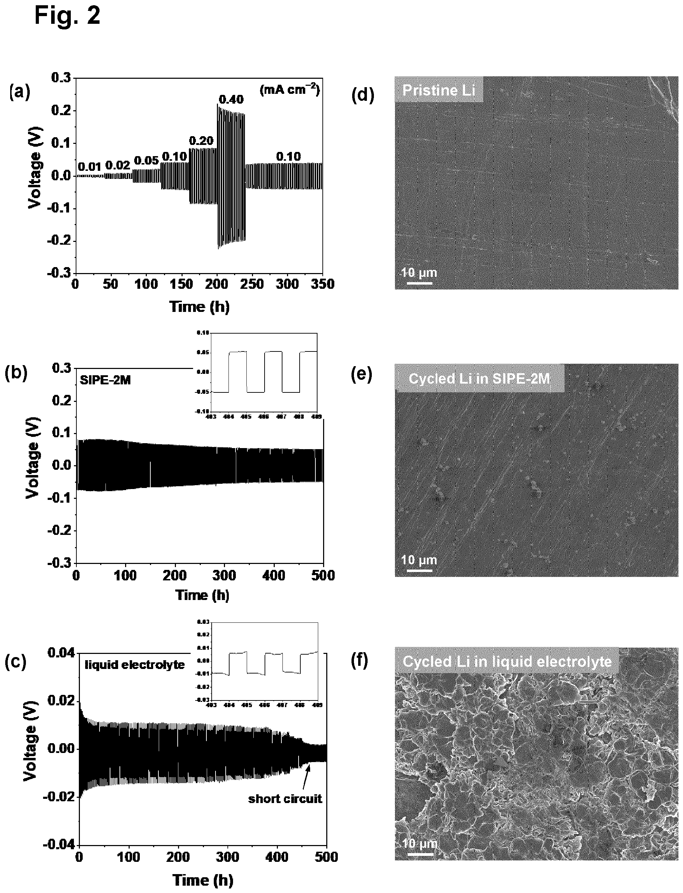

- **Fig. 2a**: Li stripping/plating tests in symmetric Li||Li cells: **(a)** Voltage versus time plot at different current densities, each cycle consists of 1h stripping and 1h plating. Galvanostatic cycling tests (current density: 0.2 mA.cm⁻² and areal capacity: 0.2 mAh.cm⁻²) of symmetric Li||Li cells using **(b)** a polymer electrolyte membrane according to the invention and **(c)** liquid electrolyte for 250 cycles; The inset plot shows magnification of selected stripping/plating cycles. SEM images of **(d)** pristine Li surface and cycled Li electrodes surface obtained from symmetric Li||Li cells employing **(e)** a polymer electrolyte membrane according to the invention and **(f)** liquid electrolyte after cycling for 250 cycles.

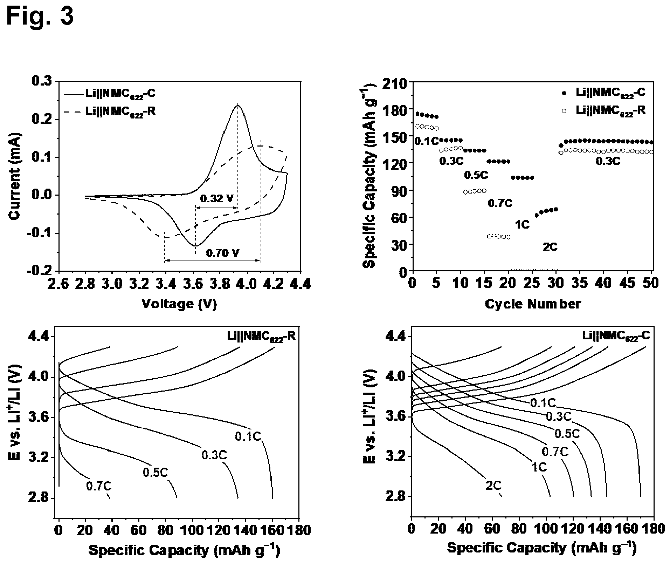

- **Fig. 3**: Cycling performance of Li||NMC₆₂₂-R and Li||NMC₆₂₂-C cells (with NMC₆₂₂-R a reference cathode and NMC₆₂₂-C a composite cathode with a polymer electrolyte according to the invention) at 40°C (cut-off/reversing voltages: 2.8 and 4.3 V): **(a)** The first cycles extracted from cyclic voltammograms. **(b)** Galvanostatic cycling and application of varying C rates from 0.1C to 2C and back to 0.3C. Selected dis-/charge voltage profiles of **(c)** Li||NMC₆₂₂-R and **(d)** Li||NMC₆₂₂-C cell

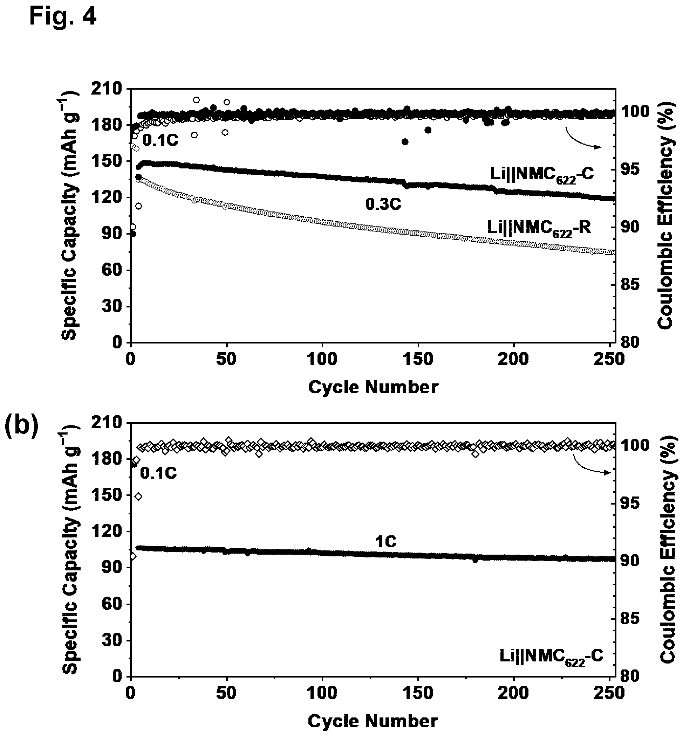

- **Fig. 4**: Long-term galavanostatic cycling tests of Li||NMC₆₂₂ at 40°C (cut-off/reversing voltages: 2.8 and 4.3 V): **(a)** 0.3C and **(b)** 1C, after three formation cycles at 0.1C.

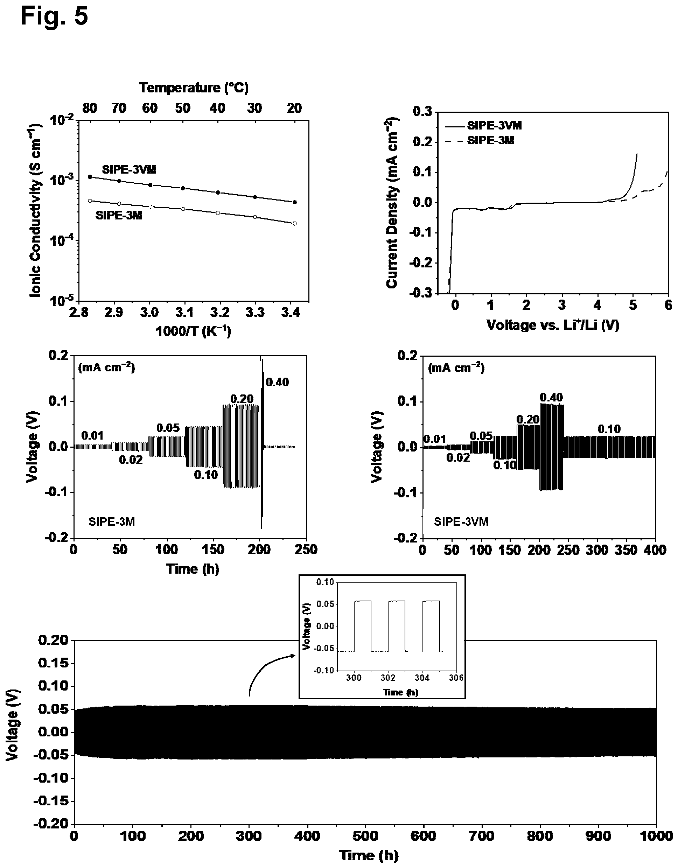

- **Fig. 5**: Electrochemical performance of polymer electrolyte membranes: **(a)** Temperature-dependent ionic conductivity plots. **(b)** Electrochemical stability windows investigated by linear sweep voltammetry at 40°C. Symmetric Li||Li cells comprising **(c)** SIPE-3M and **(d)** SIPE-3VM as electrolytes, subjected to varying current densities from 0.01 to 0.4 mA.cm⁻² and back to 0.1 mA.cm⁻². **(e)** Long-term galvanostatic cycling of Li|SIPE-3VM|Li under a current density of 0.2 mA.cm⁻² and an areal capacity of 0.2 mAh.cm⁻². The inset shows magnification of selected cycles.

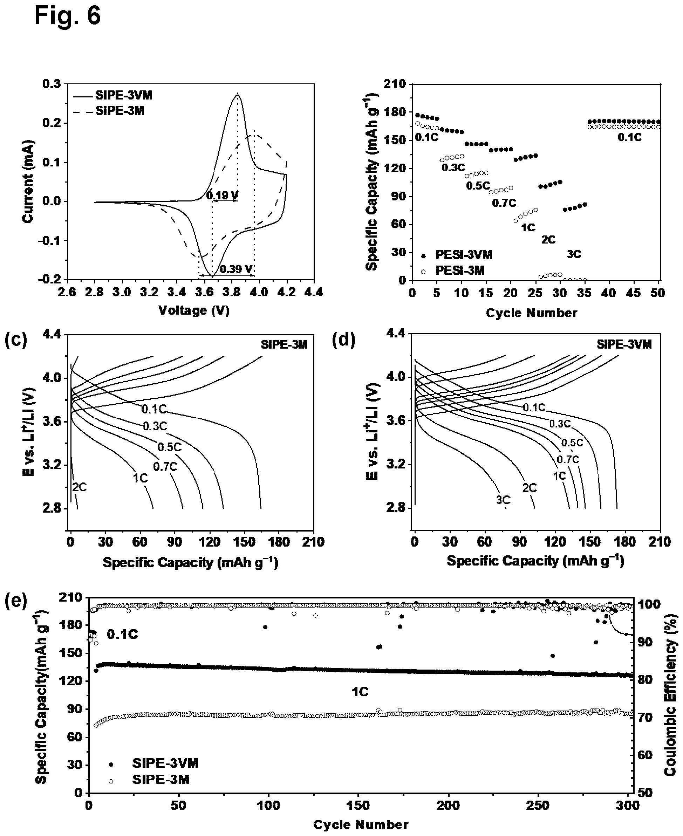

- **Fig. 6**: Investigation of polymer electrolyte membranes (SIPE-3M and SIPE-3VM) in Li||NMC₆₂₂ cells at 40°C (with cutoff/reversing voltages of 2.8 and 4.2 V): **(a)** The first cycles of cyclic voltammograms, performed at sweep rate of 0.05 mV.s-1. **(b)** Galvanostatic cycling with varying C rates from 0.1C to 3C and back to 0.1C. **(c-d)** Selected charge/discharge profiles from **(b). (e)** Long-term galvanostatic cycling at 1C, after three formation cycles at 0.1C.

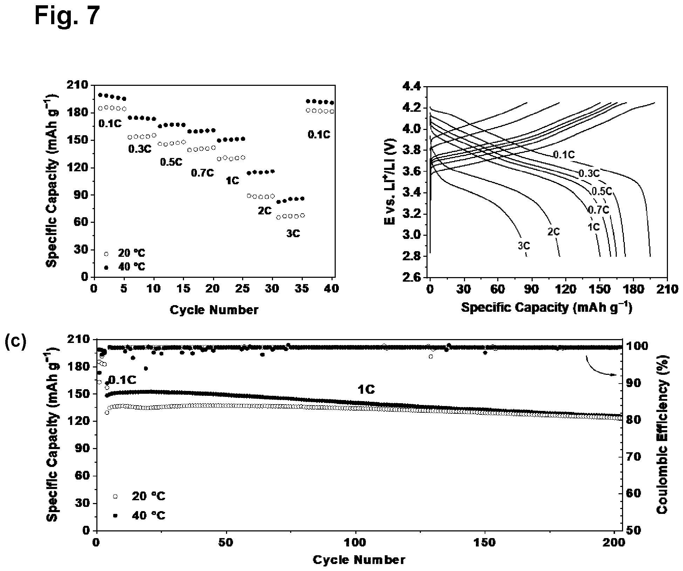

- **Fig. 7**: Battery performance of Li|SIPE-3VM|NMC₈₁₁ (with cut-off/reversing voltages of 2.8 and 4.25 V). (a) Galvanostatic cycling with vary C rates from 0.1C to 3C and back to 0.1C at 20°C (black) and 40°C (white). **(b)** Selected charge/discharge profiles at 40°C. **(c)** Long-term galvanostatic cycling at 1C, after three formation cycles at 0.1C at 20°C (black) and 40°C (white).

### Synthesis of a polymer electrolyte according to the invention (SIPE-2)

SIPE-2 was synthesized through AIBN-initiated free radical polymerization as follows. LiSTFSI and LiMTFSI were intentionally chosen on account of the following considerations: (i) TFSI⁻ anions and covalently-bonded aromatic ring corporately allow for enhanced charge delocalization; (ii) the aromatic ring inherited from LiSTFSI renders mechanical as well as electrochemical stability; (iii) LiMTFSI with flexible molecular chain enables swift segmental motion.

An oven-dried Schlenk flask was charged with LiMTFSI (1.38 g, 4 mmol), LiSTFSI (0.321 g, 1 mmol), AIBN (30 mg, 0.18 mmol) and 6 mL anhydrous dimethyl sulfoxide (DMSO). A dark red-brown solution was obtained after dissolving the monomers upon agitation. The reaction mixture was then stirred at 70 °C under argon for 15 h to complete the free-radical polymerization. DMSO was evaporated in oven at 80°C. SIPE-2 was obtained by reprecipitation in acetone twice, centrifugation, and drying in vacuo at 70°C as a white powder (yield: 62%). The number-averaged molecular weight (Mₙ), weight-averaged molecular weight (M_{w}) determined by gel permeation chromatography (GPC) are 50.4 and 91.7 kg.mol⁻¹, respectively. The polydispersity index (PDI = Mw/Mn) is 1.82.

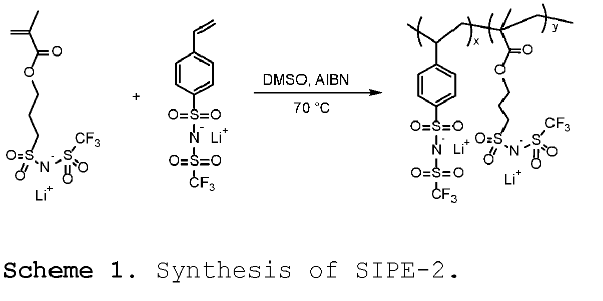

### Synthesis of a polymer electrolyte according to the invention with carbonate function (SIPE-3V)

LiMTFSI (1.38 g, 4 mmol), LiBVSA (0.36 g, 1 mmol), 2-dimethoxy-2-phenylacetophenone (102.4 mg, 0.4 mmol), and 4-vinyl ethylene carbonate (0.114 g, 1 mmol) were dissolved in 6 mL anhydrous dimethyl sulfoxide (DMSO). The as-obtained homogeneous solution was transferred to a Teflon petri dish and the UV-initiated polymerization was performed in the UVACUBE 100 curing chamber for 1 h (Hönle Group, Germany). The solvent was removed and the product was purified by re-precipitation in ethanol/acetone twice. SIPE-3V was obtained as an off-white solid (yield: 58%). All reactions were conducted in a dry room. The lithium contents for SIPE-3V is 1.91 wt% (calculated) and 2.08 ± 0.03 wt% (measured by ICP-OES). LiBVSA with divinyl functionality serves as both crosslinking agent and one of the lithium sources. LiTFSI, a lithiated monomer of high chain flexibility, is considered to ease the segmental motion and thus the transport of lithium cations. SIPE-3V differs from SIPE-3 by ingeniously integrating cyclic carbonate feature.

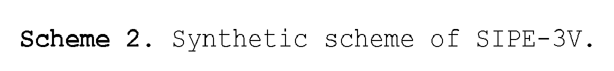

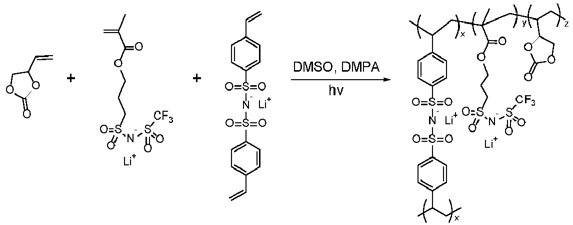

### Synthesis of a polymer electrolyte according to the invention (SIPE-3)

SIPE-3 was synthesized according to a similar procedure described for SIPE-3V, without addition of 4-vinyl ethylene carbonate (yield: 63%). The lithium contents for SIPE-3 is 2.03 wt% (calculated) and 2.25 ± 0.01 wt% (measured by ICP-OES).

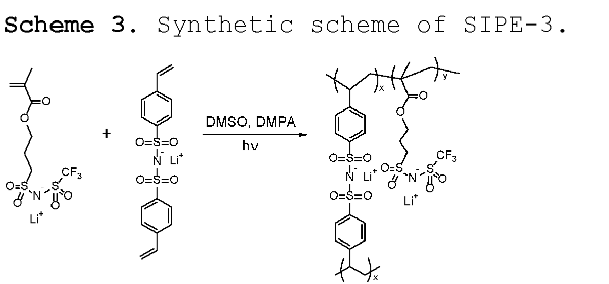

### Synthesis of a polymer electrolyte membrane according to the invention with SIPE-2 as polymer electrolyte (SIPE-2M)

PVdF-HFP features low crystallinity and considerable mechanical strength. PVdF-HFP as a processing additive was blended with SIPE-2 to fabricate the self-standing polymer electrolyte membrane via a solvent-casting process as follows.

SIPE-2 (0.275 g) and PVdF-HFP (0.225 g) were dissolved in a mixture of DMSO and acetone (5 mL, *V*/*V* = 1/1) to get a homogeneous solution. The resulting solution was transferred to a glass petri dish (*Φ* = 80 mm), and the solvent was evaporated at 80°C. The membrane was peeled off by being immersed into deionized water, and then dried at 80°C in vacuo for 24 h to remove the residual solvents. The as-obtained membrane with a thickness of ca. 80 µm was punched into 14 mm diameter circles.

The polymer membrane discs were soaked in a solvent mixture comprising ethylene carbonate (EC, 48.8 *V%*), diethyl carbonate (DEC, 48.8 *V%*), fluoroethylene carbonate (FEC, 2.4 *V%*) before electrochemical measurements. The solvent uptake was calculated by the weight difference before and after swelling, providing an average solvent uptake of ~116 wt%. The mixture of carbonates (EC:DEC:FEC = 48.8:48.8:2.4 by volume) is introduced and swells SIPE-2M. The carbonate molecules are believed to, on one hand, plasticize the polymer materials, and on the other hand provide essential conducting sites for ion conduction.

The ionic conductivity of SIPE-2M was determined by an electrochemical impedance method in a Cu||Cu pouch cell at a temperature range of 20-80°C. **Fig. 1a** shows the ionic conductivity of SIPE-2M, which is expectedly higher with increasing ambient temperature, such as 0.24 mS.cm⁻¹ at 20°C and 0.37 ms.cm⁻¹ at 40°C. The self-diffusion coefficients of lithium and fluorine were determined by PFG-NMR. The lithium transference number (t_{Li}⁺) was determined to be between 0.9 and 1.

The thermal stability of SIPE-2M was examined by TGA. An onset decomposition temperature is observed for SIPE-2M at around 160°C, which is far enough to guarantee cell safety. The T_{g} value is closely associated to the segmental motion of polymeric chains and thus transport dynamics of mobile lithium ions. The DSC trace for SIPE-2 reveals two T_{g} values at -66°C and 4°C, resulting probably from the flexible motions of pendants and the poor packing of macromolecular chains.

The electrochemical stabilities reflect the oxidation and reduction tolerance of SIPEs, which is a pivotal prerequisite for determining the proper working electrodes. **Fig. 1b** shows the electrochemical stability window by linear sweep voltammetry of SIPE-2M using Li metal as reference electrode and stainless stell as working electrode. The anodic scan does not manifest conspicuous current evolution (< 20 µA.cm⁻²) until the cell voltage was raised to 5.2 V. The excellent oxidation tolerance is accredited to the following factors: (a) the good anodic stability of polymeric backbone consisting of C-C bond; (b) the downwards shifting of frontier orbitals towards lower energy induced by strong electron-withdrawing trifluoromethyl group. Upon cathodic sweep, the exponential increase of cathodic current below 0 V vs. Li⁺/Li evinces the electrodeposition of metallic lithium.

### Synthesis of a polymer electrolyte membrane according to the invention with SIPE 3 or SIPE 3V as polymer electrolyte (SIPE-3M)

The self-standing polymer electrolyte membrane comprises PVdF-HFP and the as-prepared single-ion conductors. 0.225 g PVdF-HFP and 0.275 g SIPE-3 (or SIPE-3V) were dissolved in a mixture of DMSO and acetone (5 mL, V:V = 1:1). The homogenous solution was then transferred to a glass petri dish and evaporated at 80°C. The as-obtained membranes were dried further at 80°C in vacuo and cut into round discs (Φ = 12 mm) . The membranes were immersed in a mixture of ethylene carbonate (EC), diethyl carbonate (DEC), and fluoroethylene carbonate (FEC) (V : V : V = 48.8 : 48.8 : 2.4) before use. The polymer electrolyte membranes (c.a. 60 ± 10 µm in thickness) are designated as SIPE-3M (SIPE-3 included) and SIPE-3VM (SIPE-3V included).

### Synthesis of a reference cathode (NMC₆₂₂-R) and a composite cathode with the polymer electrolyte SIPE 2 (NMC₆₂₂-C) according to the invention

The cathodes were prepared in a dry room with dew point less than -65°C. The NMC₆₂₂-reference electrodes (NMC₆₂₂-R) were made of 92 wt% LiNi_{0.6}Mn_{0.2}Co_{0.2}O₂ (NMC₆₂₂, Ningbo Ronbay), 4 wt% poly(vinylidene difluoride) (PVdF; Solvay) and 4 wt% conductive carbon (Super C65, Imerys). The slurry of suitable viscosity was prepared by adding *N*-methyl-2-pyrrolidone (NMP) to the above mixture and stirring for 6 h. The NMC₆₂₂-composite electrodes (NMC₆₂₂-C) were made of 86 wt% NMC₆₂₂, 8 wt% SIPE-2, 2 wt% PVdF, and 4 wt% Super C65. NMC₆₂₂ and Super C65 were added into a DMSO solution of SIPE-2. After stirring for 12 h, DMSO was evaporated in oven at 80°C. Then PVdF and NMP were added, the mixture was stirred for another 6 h. The slurry was coated onto aluminum foil using the doctor blade technique. The coated electrode sheets were dried at 80°C, punched into cathodes discs of 12 mm in diameter, and further dried at 100°C for another 12 h. The areal loading was 2.3 ± 0.1 mg.cm⁻². All cathode discs were pressed at 10 t.cm⁻² before cell assembly.

As solid-state electrolytes commonly have a limited contact with porous electrodes, since they cannot penetrate the pores, a comparative analysis of NMC₆₂₂ electrodes comprising only PVdF as binder (NMC₆₂₂-R) and NMC₆₂₂ electrodes containing additionally SIPE-2 for an enhanced ionic conductivity in the electrode bulk (NMC₆₂₂-C) was performed **(****Fig. 4****).** The latter were prepared by adding 8 wt% SIPE-2 to the electrode slurry. As a result, a denser morphology with compact cohesion was observed for the NMC₆₂₂-C electrodes, which is considered beneficial for an enhanced lithium diffusion in the electrode bulk. In addition, the homogeneous distribution of SIPE-2 as catholyte was confirmed by energy dispersive X-ray spectroscopy.

Interparticle voids and open pores are observed for electrodes fabricated from a standard procedure (i.e. NMC₆₂₂-R). A denser morphology with compact cohesion is nevertheless obtained for NMC₆₂₂-C electrode, which indicates less tortuosity and would be beneficial for enhanced lithium diffusion in bulk electrode (vide infra). In addition, the homogeneous distribution of SIPE-2 as catholyte has been confirmed by energy dispersive X-ray spectroscopy.

### Synthesis of a composite cathode with the polymer electrolyte SIPE 3 or SIPE-3V according to the invention

NMC₆₂₂ and NMC₈₁₁ electrodes were prepared in a dry room (dew point < -65°C). The NMC electrodes were composed of 90 wt% active material, 4 wt% Super C₆₅ (Imerys), 2 wt% PVdF (Solvay), and 4 wt% of as-prepared inomer. Active material was dispersed in a solution of SIPE-3 (or SIPE-3V, the same type of single-ion conductor as in the polymer electrolyte membrane) in anhydrous DMSO. After removing DMSO, PVdF and n-methyl-2-pyrrolidone (NMP) were added. A homogeneous slurry of suitable viscosity was coated onto aluminum foils using doctor blade technique. The pre-dried cathode sheet was punched into round discs (*Φ* = 12 mm) that were further dried at 100°C in vacuum for 12 h. The areal loading was 2.3 ± 0.1 mg.cm⁻². All cathode discs were pressed at 10 t.cm⁻² before cell assembly.

### Electrochemical measurements

### Electrochemical compatibility of SIPE-2M with Li metal

The (electro)chemical compatibility of SIPE-2M with lithium metal has been examined, i.e., the reversible shuttling of Li⁺ from one electrode to the other crossing the polymer electrolyte and electrode/electrolyte interfaces, by conducting stripping/plating lithium test in symmetric Li||Li cell. The cell comprising SIPE-2M electrolyte was subject to continuously escalating applied current densities from 0.01 to 0.40 mA.cm⁻², and was cycled at each current density for 40 h **(****Fig. 2a****).** The interfaces are instantly stabilized at respective applied current density, especially at lower than 0.40 mA.cm⁻², showing constant polarization voltage. In addition, the overpotential is reversibly recovered when the current density was switched back from 0.40 to 0.10 mA.cm⁻², This is partly due to the applied current density not exceeding the safe bound prescribed by limiting current density of 0.82 mA.cm⁻²,

The long-term stability of electrolyte|lithium metal interfaces was investigated by galvanostatic cycling tests at an applied current density of 0.2 mA.cm⁻² and an areal capacity of 0.2 mAh.cm⁻² **(****Fig. 2b****-c).** The cell employing SIPE-2M exhibits negligible variation of overpotential during first 50 h, and gradually stabilizes in the prolonged cycles. This behavior is ascribed to the reorganization of lithium electrode surfaces with stable interphases of lower resistance. The magnification of selected cycles is displayed in the inset image of **Fig. 3b,** showing that voltage plateaued once the polarity of applied current was reversed. Such phenomenon once again highlighted the single lithium-ion conducting behavior of SIPE-2M, in which case the concentration gradient of anion is eliminated. In stark contrast, the cell comprising liquid electrolyte was shorted after about 450 h **(****Fig. 2c****).** Post-mortem analysis was subsequently carried out to investigate the surface morphologies of cycled Li electrodes **(****Fig. 2d****-f).** The cell employing SIPE-2M gave rise to a smooth Li surface without dendritic electrodeposits. The corresponding optical image of cycled Li displays metallic luster of freshly electrodeposits after cycling. However, hierarchical surface with flake- and needle-like dendrites is disclosed for the cycled Li in liquid electrolyte. Additionally, deposit detached from the bulk electrode which is electrochemically inactive (i.e. dead lithium) is found on the surface of both electrode and separator. Therefore, it is convincing that SIPE-2M is capable to suppress the formation of dendritic and porous lithium electrodeposits, thanks to the high lithium transference number and superior mechanical strength over liquid electrolytes.

### Electrochemical performance of Li||NMC₆₂₂ full-cells comprising SIPE-2M polymer electrolyte

The electrochemical performance of Li||NMC₆₂₂ full-cells comprising SIPE-2M polymer electrolyte were evaluated by means of cyclic voltammetry (CV) with cut-off potentials of 2.8 and 4.3 V vs. Li⁺/Li, in which both cells display reversible de-/lithiation processes. The cathodic peaks shift to lower electric potential upon cycling for Li||NMC₆₂₂-R cell, which is attributed to the kinetic hindrance of re-lithiation process. Of particular note, the peak positions of anodic peaks decrease upon cycling for Li||NMC₆₂₂-C SIPE cell, indicating an activation process for electrode materials to ease the delithiation. The first cycles are selected from the respective cyclic voltammograms to illustrate the difference in electrochemical behavior **(Fig. 3a).** Li||NMC₆₂₂-C shows a higher peak current and a much narrower peak separation in than Li||NMC₆₂₂-R. In addition, the Nyquist plot of full-cells before cycling implies a significantly reduced charge transfer resistance (R_{ct}) in Li||NMC₆₂₂-C. These results point out the advantages by including lithiated species as catholyte (i.e., SIPE-2 ionomer in this work) in the cathode eletrode: (i) reducing cell polarization; (ii) enabling faster Li⁺ transport kinetics.

The above-mentioned merits of ionomer-included electrodes were also demonstrated in the following battery tests (e.g., rate capability and long-term cycling tests). As shown in **Fig. 3b-d,** Li||NMC₆₂₂-C cell delivers reversible specific capacities of 173 mAh.g⁻¹ at 0.1C, 145 mAh.g⁻¹ at 0.3C, 134 mAh.g⁻¹ at 0.5C, 122 mAh.g⁻¹ at 0.7C, 104 mAh.g⁻¹ at 1C, and 67 mAh.g⁻¹ at 2C. In line with the poorer kinetics in CV, Li||NMC₆₂₂-R cell displays substantially inferior rate performance. To be noted, the cell overpotentials in Lil|NMC₆₂₂-R increase substantially at higher C-rates and no discharge capacity is delivered at C rates ≥1C. The battery performance of Li||NMC₆₂₂-C at lower temperature (i.e., 20°C) was also evaluated. The discharge capacities were found to be 134, 110, 83, 58, and 25 mAh.g⁻¹ at 0.1C, 0.3C, 0.5C, 0.7C and 1C, respectively. These values are reasonably lower than those at 40°C due to the slower transport kinetics in the polymer electrolyte, bulk electrodes, and across the electrode/electrolyte interfaces.

In the next step, the Li||NMC₆₂₂ cells were subjected to long-term galvanostatic cycling **(****Fig. 4****).** The Li||NMC₆₂₂-R cell provides a reversible discharge capacity of 162 mAh g⁻¹ in the first cycle (0.1C), accompanied by an initial Coulombic efficiency (ICE) of 90.0%. Conspicuous capacity fading is nonetheless found in the subsequent long-term cycling at 0.3C, leading to only 55.6% capacity retention after 250 cycles. The Li||NMC₆₂₂-C cell provides a considerably higher reversible discharge capacity (176 mAh.g⁻¹) and similar ICE (89.4%) in the first cycle. The tiny difference in ICE for both cells implies that negligible irreversibility occurs by including SIPE-2 as catholyte in the cathode, which again confirms the excellent electrochemical stability of SIPE-2 at high electrochemical potentials. In the ensuing cycles, the Li||NMC₆₂₂-C cell presents improved stability and appreciably better capacity retention (82.1%), thanks to the superior average CE (99.7% for Li||NMC₆₂₂-C versus 99.4% for the Li||NMC₆₂₂-R cell). This indicates that irreversible side reactions in NMC₆₂₂-C are mitigated to a great extent, presumably due to the more uniform distribution of electric potential, current and Li⁺ flow. Raising the dis-/charge rate to 1C entails improved average CE (99.9%) and significantly ameliorated capacity retention (91.5%) and suitable reversible discharge capacity of 106 mAh.g⁻¹.

The single-ion polymeric conductor (SIPE-2) was synthesized by means of a facile free radical polymerization. LiSTFSI and LiMTFSI were ingeniously selected as functional components to endow the ionomer with good mechanical and electrochemical stability, as well as high negative charge delocalization. The polymer electrolyte membrane (SIPE-2M) comprising SIPE-2 and PVdF-HFP, after incorporation of carbonate plasticizers, provides suitable ionic conductivities (e.g., 0.24 mS.cm⁻¹ at 20°C and 0.37 mS.cm⁻¹ at 40°C) and exhibits outstanding oxidation tolerance at high electrochemical potentials (up to 5.2 V vs. Li⁺/Li). The polymer electrolyte was proven to effectively suppress the growth of dendritic lithium and presented superior (electro-)chemical stability towards lithium metal in symmetric Li||Li cells, overwhelming the liquid electrolyte. These features allow for the practical operation of high-energy Li||NMC₆₂₂ full-cells with a high cell voltage of 4.3 V. Superior rate capability and long-term stable cycling were achieved by including the ionomer as catholyte in the composite cathode.

### Ionic conductivity measurements of SIPE-3M and SIPE-3VM

SIPE-3VM exhibits a non-porous and dense morphology that is essentially distinct from SIPE-3M. In addition, the melting point (Tₘ) of the blend with PVdF-HFP is lower when blended with SIPE-3V than with SIPE-3, suggesting a depressed crystallinity in the former blend. These observations imply a favorable intermolecular interaction between SIPE-3V and PVdF-HFP, which weakens the interchain entanglement and eventually leads to outstanding miscibility of the polymer blend. The local ordering effect of PVdF-HFP chains caused by strong dipole-dipole interaction between the C-F bonds is counteracted, and superior compatibility of SIPE-3V/PVdF-HFP blend is achieved. The structural modification by the cyclic carbonate group, however, does not undermine the thermal stability. The two polymer electrolyte membranes both show onset thermal decomposition temperature above 140°C.

SIPE-3VM shows a much higher solvent uptake capacity than SIPE-3M (c.a. 115 wt% for SIPE-3M and c.a. 220 w% for SIPE-3VM, despite having a dense structure. This exceptional solvent affinity decoupled from porosity is accredited to the structural similarity of the cyclic carbonate group in SIPE-3V with the solvent molecules (i.e., EC, DEC, and FEC). The ionic conductivities are plotted versus different temperatures in **Fig. 5a.** SIPE-3VM exhibits ionic conductivities of 0.44 mS.cm⁻¹ at 20°C and 0.63 mS.cm-1 at 40°C, which are more than twice as high as SIPE-3M (0.19 mS.cm-1 at 20°C and 0.29 mS.cm⁻¹ at 40°C), in spite of a lower Li⁺ concentration being measured for the former. This is in good consistency with a much higher limiting current density (1.19 mA.cm⁻²) of SIPE-3VM than SIPE-3M (0.68 mA.cm-²). The room temperature ionic conductivity of SIPE-3VM exceeding 0.4 mS.cm-¹ well fulfills the conductivity target for Electric Vehicle (EV) applications.

### Electrochemical measurements of SIPE-3M and SIPE-3VM

The electrochemical stability window is evaluated by linear sweep voltammetry **(Fig. 5b).** SIPE-3M is stable up to 5.1 V vs. Li⁺/Li (with evolved anodic current < 20 µA.cm⁻²). SIPE-3VM nonetheless shows an inferior oxidation stability up to 4.7 V vs. Li⁺/Li due to the slightly lower electrochemical stability of the in-built cyclic carbonate functional group. In the cathodic scan, the reductive decomposition of the solvents, leading to the formation of a solid electrolyte interphase (SEI) appears at 1.1-1.7 V vs. Li⁺/Li. The electrochemical stability of the polymer electrolytes towards metallic lithium is investigated in reversible lithium stripping/plating tests **(Fig. 5c-d).** The applied current density is stepwise raised from 0.01 to 0.40 mA.cm⁻² every 40 h (20 cycles), before it finally decreases to 0.10 mA.cm⁻² for the residual cycles. The symmetric cell comprising the SIPE-3M electrolyte is cycling stably for an applied current density below 0.4 mA.cm⁻²; nevertheless, it encountered a sudden voltage drop, being operated at 0.40 mA.cm⁻² after only two cycles. The cells employing SIPE-3VM manifests constant polarization at each applied current density, meanwhile the overpotentials are respectably lower (e.g., 49 mV at 0.20 mA.cm⁻² and 92 mV at 0.40 mA.cm⁻²). The symmetric lithium cell with SIPE-3VM being subjected to long-term galvanostatic cycling at 0.20 mA.cm⁻² is shortly stabilized after an electrode interface reorganization process in the first 30 cycles. The nonfluctuating voltage profile for 1000 h indicates stable lithium stripping/plating at the interfaces and reversible ion shuttling across the polymer electrolyte.

### Electrochemical performance in Li||NMC₆₂₂ cells for SIPE 3M and SIPE 3VM

CV is used to evaluate the electrochemical performance in Li||NMC₆₂₂ cells. The cells both show reversible de-/lithiation process in a voltage range of 2.8-4.2 V vs. Li⁺/Li **(Figure 6a).** Of particular note, a smaller peak separation and higher peak currents are witnessed for SIPE-3VM, indicative of superior transport kinetics. This is in good agreement with the results of the C-rate tests **(Figure 6b).** The Li|SIPE-3VM|NMC₆₂₂ cell delivers discharge capacities of 175 mAh.g⁻¹ (0.1C), 160 mAh.g⁻¹ (0.3C), 146 mAh.g⁻¹ (0.5C), 140 mAh.g⁻¹ (0.7C), 132 mAh. g⁻¹ (1C), 102 mAh.g⁻¹ (2C), and 78 mAh.g⁻¹ (3C). The relatively larger polarization observed for Li|SIPE-3M|NMC₆₂₂ results in considerably lower discharge capacities, and hinderes the cell from being operated above 2C **(****Fig. 6c****-d).** The Li|SIPE-3VM|NMC₆₂₂ cell also demonstrates good discharge capacities at 20°C, such as, 154 mAh.g⁻¹ (0.1C), 141 mAh.g⁻¹ (0.3C), 133 mAh.g⁻¹ (0.5C), 108 mAh.g⁻¹ (0.7C), 86 mAh.g⁻¹ (1C), and 56 mAh.g⁻¹ (2C), and presents excellent stability (97.1% capacity retention) for over 200 cycles at 0.5C. Benefiting from fairly high ionic conductivity of SIPE-3VM, the fabrication of cells with an areal cathode active material mass loading >7 mg.cm⁻² is feasible. Long-term cyclability of cells employing different electrolytes, subjected to galvanostatic cycling at 1C, are evaluated on the same basis **(****Fig. 6e****).** Both polymer electrolytes present similar initial Coulombic efficiencies (ICE) of about 91% and average Coulombic efficiencies over 99.6% in the succeeding cycles, allowing for a remarkable capacity retention of 92.3% for SIPE-3VM and no apparent fading for SIPE-3M for over 300 cycles. The use of polymer electrolytes moreover outperforms liquid electrolyte in terms of capacity retention (86.4% for the latter) .

Relatively smooth and compact surfaces without the formation of dendritic lithium are revealed for cycled lithium electrodes with polymer electrolytes, which contrasts sharply with the hierarchical and cracked lithium surface cycled in liquid electrolyte. This highlights the importance of homogeneous lithium deposition enabled by the single-ion conductor.

The suitability of SIPE-3VM with cathode active materials of higher nickel content, i.e., NMC811, has been evaluated **(****Fig.7****).** The cell is able to deliver reversible capacities of 185 mAh.g⁻¹ (0.1C), 154 mAh.g⁻¹ (0.3C), 147 mAh.g⁻¹ (0.5C), 141 mAh.g⁻¹ (0.7C), 129 mAh.g⁻¹ (1C), 87 mAh.g⁻¹ (2C), and 67 mAh.g⁻¹ (3C) at 20°C, which are further improved at 40°C, providing satisfactory values of 198 mAh.g⁻¹ (0.1C), 174 mAh.g⁻¹ (0.3C), 167 mAh.g⁻¹ (0.5C), 160 mAh.g⁻¹ (0.7C), 151 mAh.g⁻¹ (1C), 114 mAh.g⁻¹ (2C), and 86 mAh.g⁻¹ (3C). Long-term galvanostatic cycling at 1C for over 200 cycles gives superior capacity retention of 91.1% at 20°C than 81.7% at 40°C. We may note that the battery performances of cells comprising SIPE-3VM are among top-of-the-range Li||NMC batteries employing SIPEs, particularly considering that most SIPEs are barely compatible with NMC cathode active materials due to the inferior oxidation stability.

The Li|SIPE-3VM|NMC₆₂₂ cell in a pouch format is fully charged to 4.2 V vs. Li⁺/Li to power a blue LED lamp. Furthermore, the device is not disturbed when folded. Under extreme conditions like cutting and piercing, the cell voltage drops to 0 but instantly rises up for powering again. This illustrates that the polymer electrolytes, essentially differing from conventional liquid electrolytes, are capable to endure mechanical abuse and eradicate the risk from electrolyte leakage.

### Abbreviations

- PVdF-HFP: poly(vinylidene fluoride-co-hexafluoropropylene)
- LiSTFSI: lithium sulfonyl(trifluoromethane sulfonyl)imide styrene
- LiMTFSI: (lithium (3-methacryloyloxypropylsulfonyl) (trifluoromethylsulfonyl)imide
- LiBVSA: lithium bis(4-vinylphenyl)sulfonyl)imide
- NMP: N-methyl-2-pyrrolidone
- AIBN: azobis(isobutyronitril)
- DMSO: dimethyl sulfoxide
- SIPE: single-ion polymer electrolyte
- NMC₈₁₁: LiNi_{0.8}Mn_{0.1}CO_{0.1}O₂
- NMC₆₂₂: LiNi_{0.6}Mn_{0.2}Co_{0.2}O₂
- CV: Cyclic Voltammetry

## Claims

1. Polymer electrolyte comprising a copolymer that comprises a polyolefine backbone, at least a first structural unit having the following formula (A) or (B) and at least a second structural unit having the following formula (C): 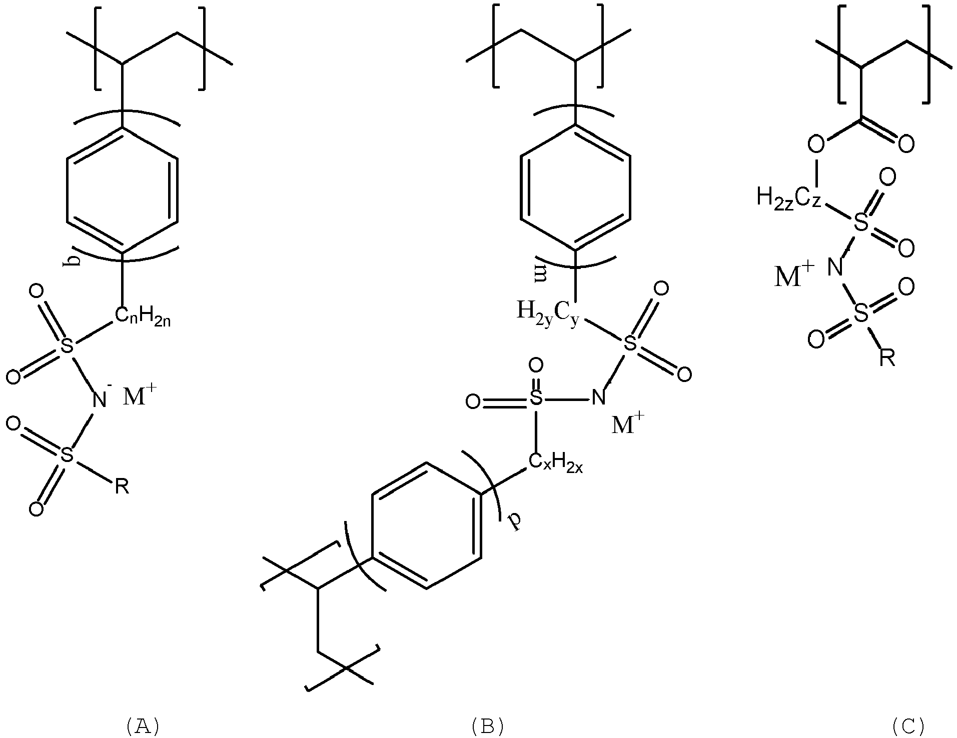 wherein R has the formula -CF₂CF₃, -CF₃ or is a fluorine atom with the formula -F,
wherein M⁺ is an alkali metal ion preferably Li⁺, K⁺ or Na⁺ and the alkali metal ion is ionically bound to N⁻,
n, x, y being integers ≥ 0 and
m, p, q being integers ≥ 1 and
z being an integer ≥ 2 preferred ≤ 20 more preferred ≤ 10.

2. Polymer electrolyte according to claim 1 **characterized in that** the copolymer comprises at least a third structural unit having the formula (D), 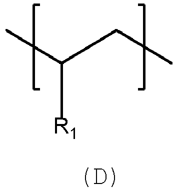 wherein R₁ is a carbonate group and/or a vinyl-based monomer with carbonyl groups.

3. Polymer electrolyte membrane comprising at least a polymer electrolyte according to claim 1 or 2.

4. Polymer electrolyte membrane according to claim 3 comprising an additive chosen from the group consisting of poly(vinylidene) fluoride (PVdF), poly(vinylidene fluoride-co-hexafluoropropylene) (PVdF-HFP), polyolefins, carboxymethyl cellulose or a gum and it derivatives preferably sodium carboxy methyl cellulose, guar gum, alginate, chitosan, and combinations thereof.

5. Polymer electrolyte membrane according to claim 3 or 4 comprising at least an organic carbonate.

6. Polymer electrolyte membrane according to claim 5 **characterized in that**, the organic carbonate is a linear or a cyclic carbonate or a partially fluorinated carbonate or preferably chosen in the list consisting of ethylene carbonate, dimethyl carbonate, diethyl carbonate, propylene carbonate, ethyl methyl carbonate, fluoroethylene carbonate, and 3,3,3-trifluoropropylene carbonate or ethyl acetate.

7. Cathode comprising at least an active cathode material and a polymer electrolyte according to one of the claims 1 or 2.

8. Cathode according to claim 7, **characterized in that** the active cathode material is LiMPO₄, wherein M is chosen from the list consisting of Fe, Mn, Co and Ni or combinations thereof, and/or lithium nickel manganese and/or cobalt oxide (Li-NMC) with the formula LiₐNiₓM_{y}M'_{z}O_{2+b}
wherein M is chosen from the list consisting of {Co, Mn or combinations thereof},
M' = Mg, Al, V, Ti, B, Zr, Sr, Ca, Cu, Zn, Nb, Mo, W, Ta and combinations thereof;
and wherein:
0,8 ≤ a ≤ 1,2;
0,2 ≤ x ≤ 1;
0 < y ≤ 0,8;
0 ≤ z ≤ 0,2; and
-0,2 ≤ b ≤ 0,2.

9. Electrochemical cell comprising a cathode, an anode and a polymer electrolyte membrane according to one of the claims 3 to 6, wherein the polymer electrolyte membrane is placed between the cathode and the anode.

10. Electrochemical cell according to claim 9 **characterized in that** the cathode is a cathode according to claim 7 or 8.

11. Electrochemical cell according to claim 9 or 10 **characterized in that** the anode comprises metallic lithium or graphite and/or silicon and/or SiOₓ with x < 2 or a metallic or carbon-based current collector with a coating of metallic lithium.

12. Process for making a polymer electrolyte wherein said process comprises following steps:
(a) providing at least a first monomer comprising at least a first anion ionically bound with an alkali metal cation chosen from the list consisting of {Na+, Li⁺, K⁺} and at least a second monomer comprising at least a second anion ionically bound with a an alkali metal cation chosen from the list consisting of {Na+, Li⁺, K⁺} as reactants
(b) mixing the reactants
(c) adding to the reactants an organic solvent
(d) initiating the polymerization reaction preferably by adding a radical initiator and/or via heat treatment and/or via UV irradiation
(e) evaporating the organic solvent
(f) removing the obtained polymer electrolyte.

13. Process for making a polymer electrolyte according to claim 12 wherein between step (e) and (f) a step of reprecipitation in an organic solvent and/or a step of centrifugation and/or a step of drying at a temperature in a range between room temperature and 100°C preferably between 50°C and 80°C more preferably between 60°C and 70°C.

14. Process for making a polymer electrolyte according to claim 12 or 13 wherein under step (a) a carbonate and/or a vinyl-based monomer with carbonyl groups is provided.

15. Process for making a polymer electrolyte according to one of the claims 12 to 14 **characterized in that** the first monomer is lithium sulfonyl(trifluoromethane sulfonyl)imide styrene (LiSTFSI) or lithium bis(4-vinylphenyl)sulfonyl)imide (LiBVSA) and/or the second monomer is lithium (3-methacryloyloxypropylsulfonyl) (trifluoromethylsulfonyl)imide (LiMTFSI).

16. Process for making a polymer electrolyte membrane wherein said process comprises following steps:
(a) providing the polymer electrolyte obtained by a process according to one of the claims 12 to 15 and an additive
(b) adding an organic solvent
(c) evaporating the solvent
(d) removing the polymer electrolyte membrane.

17. Process for making a polymer electrolyte membrane according to claim 17 wherein between step (c) and (d) the polymer electrolyte membrane is put in at least one organic solvent or a mixture of organic solvents preferably carbonates.
